(19)

Europäisches Patentamt
European Patent Office
Office européen des brevets

(11) **EP 4 462 206 B1**

(12) **EUROPEAN PATENT SPECIFICATION**

(45) Date of publication and mention
of the grant of the patent:
**28.01.2026 Bulletin 2026/05**

(51) International Patent Classification (IPC):
***G05B 19/4093*** *(2006.01)*    ***G05B 19/41*** *(2006.01)*
***B26D 5/00*** *(2006.01)*    ***B26F 1/38*** *(2006.01)*

(21) Application number: **24174261.8**

(22) Date of filing: **06.05.2024**

(52) Cooperative Patent Classification (CPC):
**G05B 19/4093; B26D 5/005; B26F 1/382;**
**G05B 19/41;** G05B 2219/35097; G05B 2219/35401;
G05B 2219/45038; G05B 2219/50284;
G05B 2219/50336; G05B 2219/50341

(54) **METHOD FOR DETERMINING A CUTTING PATH AND ASSOCIATED PROCESSING UNIT**

VERFAHREN ZUR BESTIMMUNG EINES SCHNEIDWEGS UND ZUGEHÖRIGE
VERARBEITUNGSEINHEIT

PROCÉDÉ DE DÉTERMINATION D'UNE TRAJECTOIRE DE COUPE ET UNITÉ DE TRAITEMENT
ASSOCIÉE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **12.05.2023 IT 202300009561**

(43) Date of publication of application:
**13.11.2024 Bulletin 2024/46**

(73) Proprietor: **SCM Group S.p.A.**
**47921 Rimini (RN) (IT)**

(72) Inventor: **CECCHI, Marco**
**47921 RIMINI (IT)**

(74) Representative: **Tiburzi, Andrea et al**
**Barzanò & Zanardo Roma S.p.A.**
**Via Piemonte 26**
**00187 Roma (IT)**

(56) References cited:
**EP-A1- 3 859 464**    **GB-A- 2 111 723**
**US-A- 5 923 561**    **US-B2- 6 728 595**

**Description**

The present invention relates to a method for determining a cutting path.

More specifically, the invention concerns a method for determining a cutting path for a machine tool configured to create cutting lines on materials such as plastic, cardboard, corrugated plastic, wood, composite materials, and similar, to be performed by a cutting tool shaped respectively as a flat insert or a sharp blade, or a flat pointed blade, or a wedge-shaped sharp blade.

In the following, the description will be particularly directed towards the machining of panels made from thin sheets of soft material, which are to be cut or carved at full or partial depth. However, it is clear that the present description should not be considered limited to these specific uses and the exclusive types of materials or objects mentioned here.

**Background**

Methods for machining thin sheets of soft materials, such as sheets or panels made of cardboard, wood, corrugated plastic, and composite materials, using a numerically controlled machine tool are well known.

Such a machine tool generally includes an operator group capable of performing the cutting operation along a programmed or predefined cutting path and a tool holder that mounts said cutting tool.

The operator group is generally associated with a movable carriage of the machine tool, commonly referred to as a cutting plotter, which provides the operator group with the necessary translational degrees of freedom to execute the predetermined cutting path. The operator group is also configured to rotate a tool holder around its axis during the cutting operation.

The cutting operation may include a carving and separation operation by performing an carving at full depth or a partial carving operation without separating the panel.

The cutting operation occurs when the tool is lowered and intersects the panel's surface along a segment corresponding to the projection, on the panel's surface, of the blade's edge along the tool holder's operational axis. This segment, in addition to having its centre on the curvilinear segment, is also tangent at that point to the aforementioned curve. In this way, in the known technique, the centre of the cutting tool apparently follows the predetermined cutting path.

Although this coordination between the tool's position, achieved through the machine's movable carriage translations and the tool's rotation around the tool holder's operational axis, maintains the centre of the tool tangent to the predetermined cutting path, a first problem encountered is that during the tool's cutting motion along the curvilinear segment of the predefined cutting path, undesirable drifts occur at the tool cutting edge. This is particularly true for types of cutting tools where the cutting edge is spaced apart from the tool holder's operational axis. These drifts result in consequent tears and/or cuts on the machined panel that do not correspond to the predetermined cutting path.

Methods and systems of the prior art are described for example in the publications GB 2 111 723 A, EP 3 859 464 A1, US 6 728 595 B2, US 5 923 561 A.

Therefore, it is desirable to improve the machine tool's coordination to reduce discrepancies between the predetermined cutting path and the one actually cut by the tool.

**Aim of the Invention**

Aim of the present invention is to overcome these disadvantages by providing a method for determining a cutting path that maintains correspondence between the cutting path performed by the cutting edge of a tool and a cutting path programmed for the tool centre. Therefore, this method allows determining a cutting path that reduces discrepancies between the predetermined cutting path and the one actually cut by the tool.

Object of the invention is thus a method as claimed in claim 1, a processing unit as claimed in claim 8, and a computer product as claimed in claim 10. Further preferred embodiments are described in the dependent claims.

**List of Attached Figures**

The present invention will now be described, by way of example, but not limited to, according to one of its embodiments, with particular reference to the attached figures, in which:

- Figure 1 shows a perspective view of a machine tool comprising an operator group, a base, and a machining table suitable for clamping the panels to be machined;
- Figure 2 shows a perspective view of the operator group comprising a tool holder and a cutting tool mounted in the tool holder;

- Figure 3 shows a front view of a detail of the operator group shown in Figure 2;

- Figures 4A and 4B show a section of a respective cutting tool;
- Figure 5 schematically shows a cutting path performed according to a known technique whereby the tool holder's operational axis is spaced from the cutting edge of the used cutting tool;
- Figure 6 shows a block diagram of a method for determining a cutting path for a processing unit of a machine tool, according to an embodiment of the present invention;
- Figure 7 schematically shows a cutting path executed on the panel following the application of the method object of the present invention;
- Figures 8-11 schematically show a further cutting path executed with a tool, in 4 distinct positions, following the application of the method object of the present invention.

## Detailed Description of the Invention

In the various figures, similar parts will be indicated with the same numerical references.

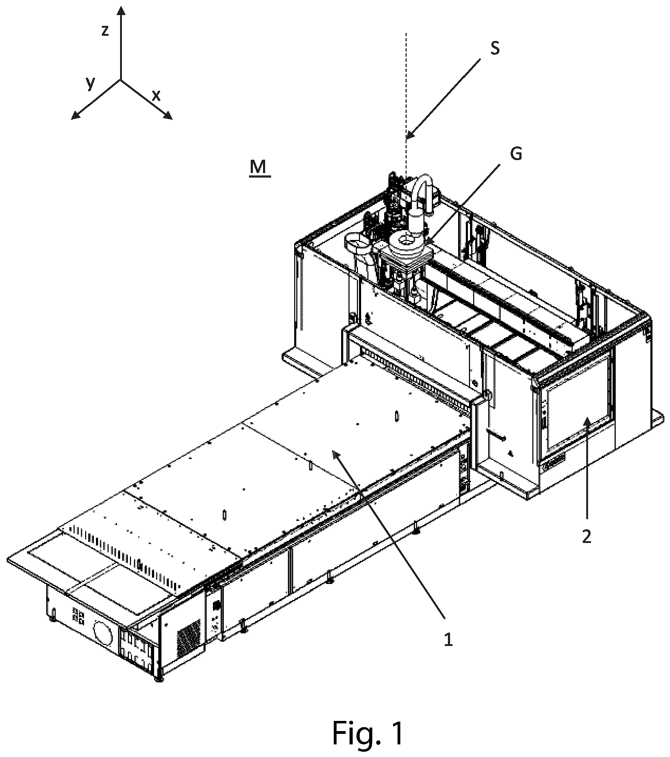

Referring to Figure 1, the machine tool M comprises a base and a machining table 1 of flat and horizontal shape, suitable for clamping and/or supporting sheets, panels, and/or workpieces. The panel to be machined may include a thin sheet of soft or plastic material, such as a sheet or panel of cardboard, wood, plastic (e.g., vulcanized rubber gaskets, TPE, etc.), corrugated plastic, composite materials, and/or any other material.

The machine tool M further comprises an operator group G and one or more guiding means such as mobile translating carriages capable, when actuated by respective actuators, of imparting controlled translations along three orthogonal directions to the operator group G.

In an alternative configuration, the guiding means may be of the rotary type. Generally, the guiding means provide the operator group G with the necessary degrees of freedom for translation/rotation to perform a cutting path, thereby enabling the necessary translations to bring the operational axis A of the tool holder 11 to a desired point on the cutting path and to regulate the depth of the tool cut in the workpiece P.

The machine tool M also comprises a control or processing unit responsible for coordinating the actions necessary to execute one or more machine instructions to perform the method described later. Such a control or processing unit can be configured to command the operation of the respective actuators to execute the predetermined cutting path 40.

Furthermore, the control or processing unit can be operatively connected to display means or a user interface 2 of the machine M to present information related to the machine M's operation.

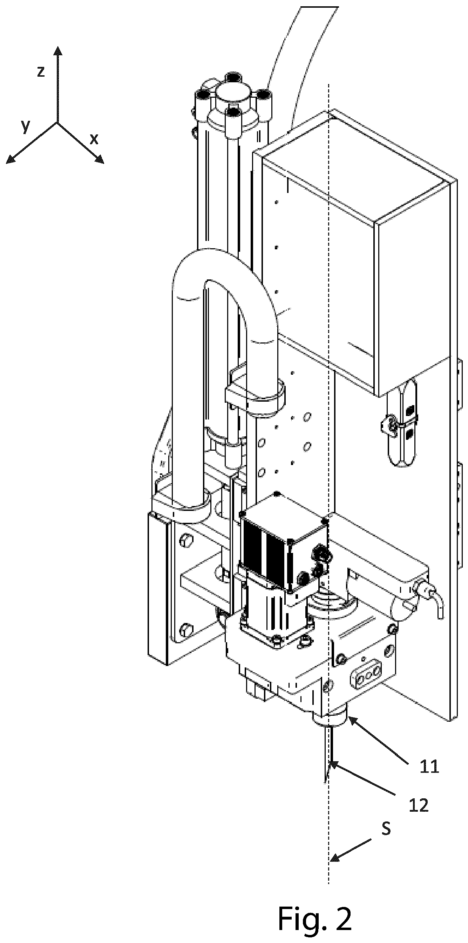

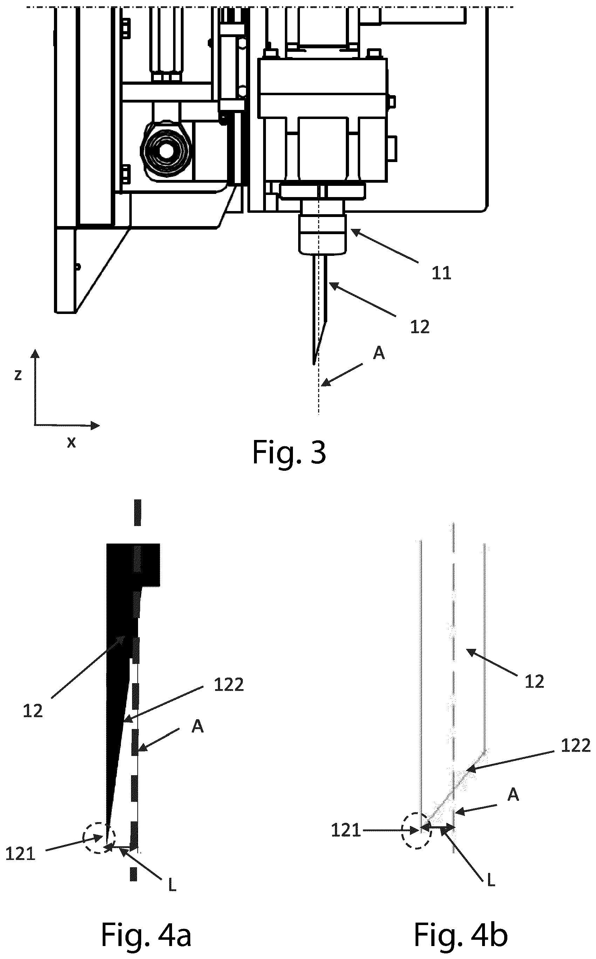

Referring to Figures 2 and 3, a description of an operator group G is provided hereinbelow, the operator group G is described associated with a machine tool M of the type shown in Figure 1.

The operator group G is longitudinally developed around its own axis S, which, when the operator group G is installed on said machine tool M, is arranged orthogonally to said machining table 1. The operator group G includes a tool holder 11 equipped with a respective cutting tool 12 that is extended along an operational axis A, which can be parallel to the axis S, or coincident with said axis S.

The tool holder 11 is configured to mount and/or retain a cutting tool 12. The tool holder 11 is also configured to be rotatable relative to its operational axis A, for example, by means of actuators of the operator group G configured to rotate the tool holder 11 relative to the operator group G by a rotation angle $\alpha$ relative to the operational axis A.

The angular orientation of the tool holder 11 can be controlled with an electric motor. Thus, the operator group G rotates the tool holder 11 around the axis A during the cutting operation.

The cutting tool 12 shown in Figures 4A and 4B can be a tool configured as a flat metallic insert or blade, equipped with an edge made sharp by grinding or another technology. This cutting tool 12 acts as a cutter to perform the cutting of the materials mentioned above. The geometrical plane of the cutting tool 12, when the tool 12 is mounted in the tool holder 11, comprises the operational axis A of the tool holder 11, and the edge 122 can intersect the operational axis A.

In particular, the cutting tool 12 comprises an edge 122 whose cutting end 121 is spaced from the operational axis A of the tool holder 11 and, therefore, does not correspond with the spindle axis C.

The edge 122 is arranged along the oblique side of the insert or blade relative to the operational axis A. The cutting end 121 of the edge 122 is configured to intersect, during the cutting operation, the panel's surface to be machined and to penetrate at least partially into the panel to perform the desired cutting operation.

Conventionally, the cutting operation is performed by dragging the cutting tool 12 over the workpiece or panel to be machined. Therefore, the cutting tool 12 is not of the rotary type and carves by dragging, functioning as a so-called "drag knife."

The tool holder 11 may also include a pneumatic or electric actuator that imparts an oscillatory axial motion to the cutting tool 12. Therefore, the actuator provides for generating a corresponding oscillatory motion of the cutting tool 12 relative to the tool holder 11 itself, along the direction of the operational axis A of the tool holder 11, so that the speed on the workpiece or panel of the cutting end 121 of the edge is added to the translational speed of the cutting tool 12 on the workpiece or panel to be machined, making the cutting operation more effective.

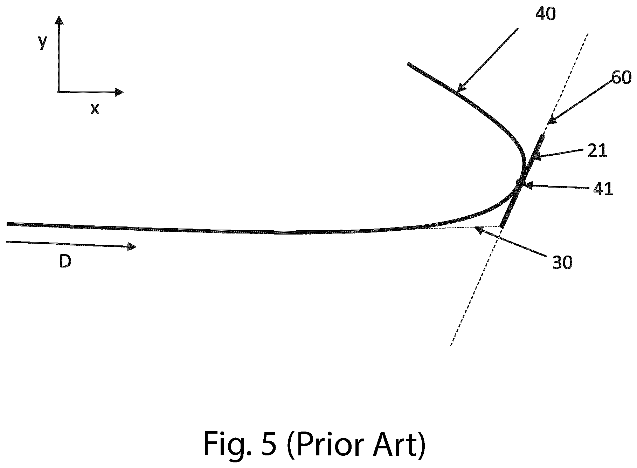

Referring to Figure 5, it is shown a cutting path executed according to the known technique on the panel using a tool holder 11 whose axis A is spaced from the cutting end 121 of the edge 122 of the cutting tool 12.

Figure 5 shows how, in the known art, the use of cutting tools 12, whose cutting end 121 is excessively spaced from the tool centre (e.g., cutters for performing fast cuts with less cutting resistance), generates defective machining where the curvature of the predefined cutting path 40 is more pronounced.

During the cutting operation, the cutting tool 12 is lowered and intersects the panel's surface along a segment 21 corresponding to the projection, on the panel's surface, of the edge 122 of the cutting tool 12 along the operational axis A of the tool holder 11. The cutting tool 12 is dragged along the predefined cutting path 40, maintaining the tangency of the tool centre to the predefined cutting path 40, and particularly along the curvilinear segment of the cutting path 40. The actual cut 30 performed by the cutting tool 12 is shown in Figure 5 with a dashed line.

Conventionally, the curvilinear segment, being effectively performed in tangency at the tool centre, causes discrepancies between the predefined path 40, performed by the tool centre, and the one actually cut by the tool's tip 121 of the cutting tool 12. As clearly shown in Figure 5, the actual cut 30 does not correspond to the predefined cutting path 40 along the curvilinear segment, thus an undesirable lateral drift of the cutting end 121 of the cutting tool 12 occurs. Consequently, the cutting end 121 follows a different trajectory from that of the programmed curve 40.

When wxecuting the predefined cutting path 40 from the tool centre as per the known technique, the cut groove widens near and at the curvilinear segment where the curvature is more pronounced. Since in the known art the cutting tool 12 is always tangent to the predefined cutting path 40, and its centre C is positioned at the tangency point, i.e., at the operational axis A, near a "tight" turn, the cutting end 121 of the cutting tool 12, which is positioned at the tail, sweeps in an area that is larger the further the cutting end 121 of the tool 12 is from the tool centre C (and therefore from the operational axis of the tool holder A). Consequently, a cut groove or drift of the cutting tool 12 is generated. The groove's width is considered a machining defect since the desired effect is instead a "filamentous" cut.

For example, in the case where the curvilinear segment is a parabola (which has a constant convexity), the cut groove is generated only outside the parabola itself.

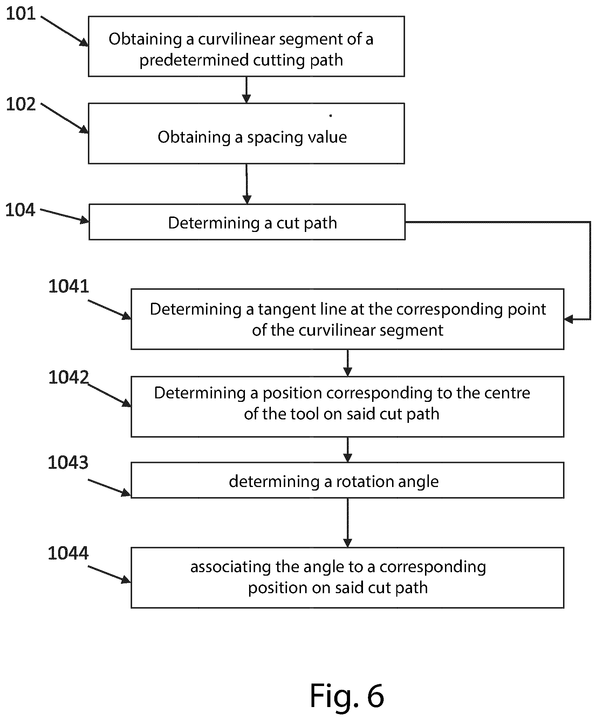

Referring to Figure 6, is shown a block diagram of a method 100 for determining a cutting path $\Gamma$ for a processing unit of a machine tool M previously described, according to an embodiment of the present invention.

The described method 100 allows performing cuts using cutting tools where the cutting point corresponding to the cutting end 121 of the tool 12 itself is placed at a distance L from the operational axis A of the tool holder 11, thus obtaining curved cuts that match to the predefined cutting path 40 as programmed in the design software provided. In this way, the method enables performing cuts following the predefined cutting path 40 with the cutting end 121.

The method 100 includes a step of obtaining 101 at least a portion of the predefined cutting path 40 comprising a curvilinear segment.

The predefined cutting path 40 is a flat cutting path to be executed on the panel's flat surface itself. The predefined cutting path 40 comprises a sequence of points P=(x,y) on the panel on which the cutting tool 12 should act, or a Cartesian equation of a curve or its parameterization, stored in a memory unit of the machine tool M or stored externally to the machine M itself, for example in a server or terminal coupled to the processing unit of the machine tool M.

The predefined cutting path 40 may be composed of multiple sections. Therefore, step 101 of the method may also include a post-machining step of the multiple sections to remove discontinuities in the predefined cutting path 40, for example by aligning the sections obtained through mathematical methods to generate a continuous cutting path. Therefore, the cutting curve of the predefined cutting path may result, for example, from the union of multiple arcs, connected at the ends, such that the successive union of these arcs represents the entire curve A. Some of these arcs may be portions of notable and particularly simple curves, such as line segments and/or arcs of circles or parabolas, while other arcs - to be cut, for example, to create artistic shapes - may be non-trivial curves.

The method 100 further includes a step of obtaining a spacing value L between the cutting end 121 and the operational axis A of the tool holder 11. The spacing value L can be a distance stored in a memory unit of the machine tool M or externally to the machine M itself, as described with reference to step 102.

The method 100 continues with a step of determining 104 a cutting path $\Gamma$ based on the curvature of the curvilinear segment and the spacing value L previously obtained in step 102 of method 100. The determined cutting path $\Gamma$ allows the cutting end 121 to follow the predefined cutting path 40 while the operational axis A of the tool holder 11 occupies a corresponding position on the cutting path $\Gamma$.

The step of determining 104 a cutting path $\Gamma$ can be performed for a plurality of points of the curvilinear segment and includes the following sub-steps described for each point of said plurality of points.

In sub-step 1041, a tangent line 60 is determined for the curvilinear segment at a corresponding point 42, 43, 44, 45 of the curvilinear segment. The tangent line 60 can be obtained by calculating the derivative of the curvilinear segment at the corresponding point 42, 43, 44, 45 through numerical or analytical methods.

Applying the analytical method and considering a generic parameter u, such as the curvilinear abscissa, which is the length of the curvilinear segment, assumed rectified, the generic parameter u is selected to be increasing, or decreasing, in the direction of the cut along the curvilinear segment. A generic point P=(x,y) of the curvilinear segment, described as a function of u, can also be indicated as P(u)=(x(u), y(u)). At this point, both the tangent vector T(u) and the normal vector N(u) to the curvilinear segment can be quantified with the following analytical formulas:

$$T(u) = P'(u)/\|P'(u)\|$$

$$N(u) = T'(u)/\|T'(u)\|$$

and in the specific case where u is the curvilinear abscissa s, it is:

$$T(s) = dP/ds$$

$$N(s) = (dT/ds)*r(s) = (d^2P/ds^2)*r(s)$$

where r is the radius of curvature of the curvilinear segment at its point P. The curvature k(u) at point P(u) can be determined using the following analytical formula:

$$k(u) = 1/r(u) = \|(x'*y'')-(y'*x'')\|/\|P'(u)\|^3$$

where x(u) corresponds to the abscissa of point P(u), and y(u) to the ordinate, and the derivatives are performed with respect to u.

In the practical management of the numerically controlled machine tool M configured for cutting a panel, the analytical derivation can be replaced by finite difference formulas (i.e., using non-infinitesimal differences formulas).

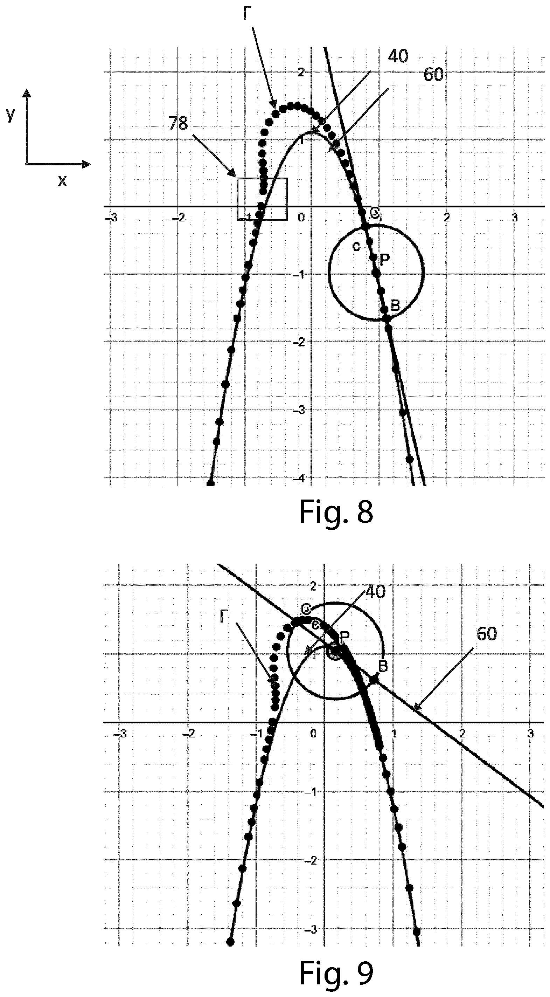

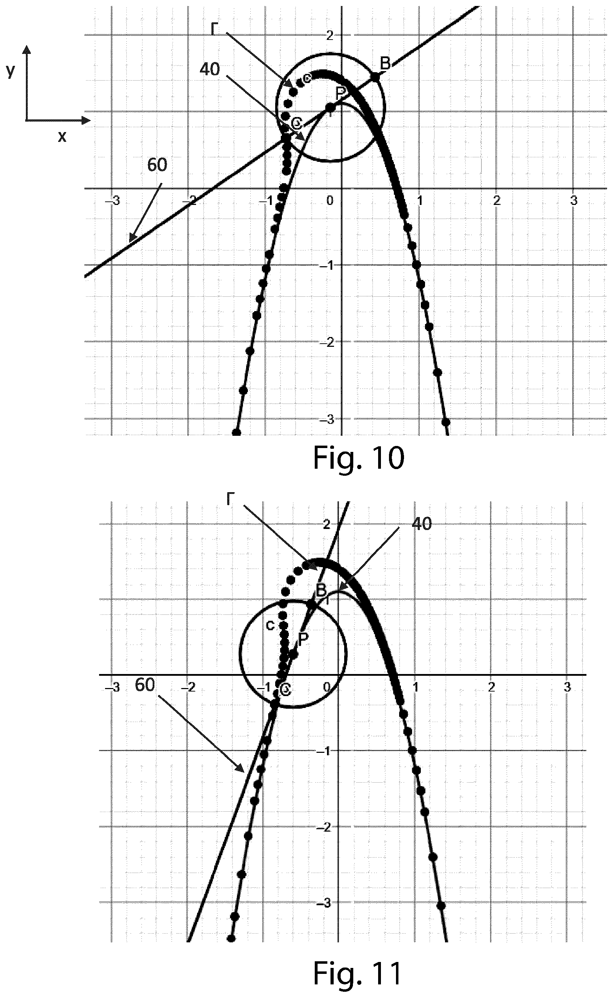

The numerical values corresponding to the given formulas are easily computable for each point P(u) of the curvilinear segment using usual calculation programs normally implemented in the processing units of machine tools M, simply by providing an equation of the curvilinear segment, as shown with reference to Figures 8-11, in any form, such as Cartesian form; or in the parametric form P(u) mentioned above; or in a reparameterized form with another parameter, which advantageously maintains the same direction of the physical cut.

Subsequently, in step 1042, the position 72, 73, 74, 75 corresponding to the tool holder's centre 11 is determined by proceeding from said point 41 along the tangent line 60 for the spacing value L previously obtained in step 102 of method 100.

Considering again the parameter u, the tool centre C(u) can be calculated using the following analytical formula:

$$C(u) = P(u)+L*T(u)$$

Therefore, the locus of positions C(u) of the tool centres can be obtained, corresponding to the cutting path Γ, as shown, for example, with reference to Figures 8-11. The cutting path Γ can be determined considering the cutting end 121 at point P(u) and its projection on the panel to be cut placed along the tangent to the curvilinear segment.

The cutting path Γ, when executed by the tool centre, allows performing a cut corresponding to the programmed cutting path 40.

Method 100 proceeds with step 1043 of determining a rotation angle α of the cutting tool based on the inclination of the corresponding tangent line 60 relative to a reference axis, for example, the X or Y axis.

In step 1044, the rotation angle α of the cutting tool 12 is associated with a corresponding position 72, 73, 74, 75 of the cutting path Γ.

The processing unit can be configured to execute the determined cutting path Γ, so that the cutting end 121 follows said predefined cutting path 40 while the operational axis A of the tool holder 11 occupies a corresponding position on said cutting path Γ. In this way, the cutting path Γ, i.e., the locus of points C(u) as determined above, is associated with the predefined cutting path 40, the locus of points P(u).

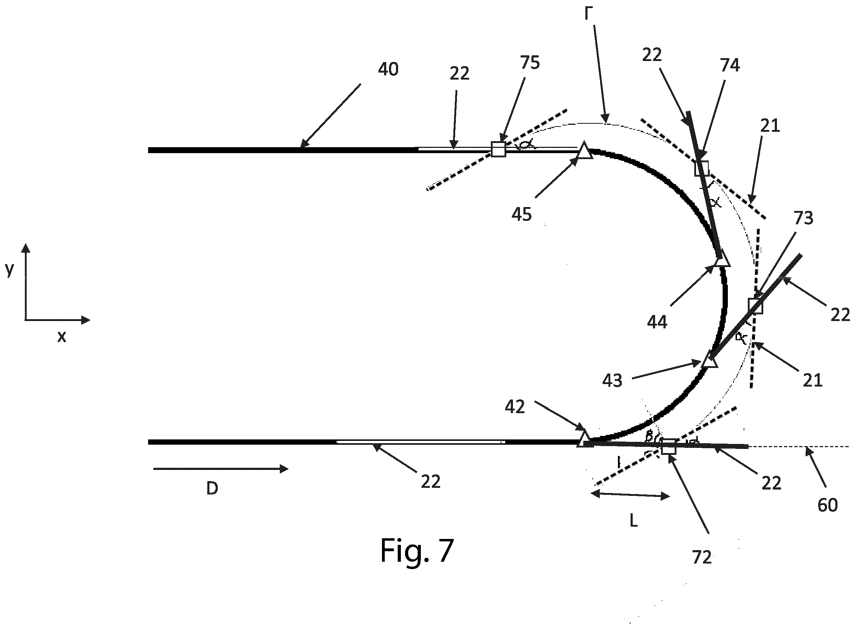

Referring to Figure 7, a cutting path Γ is schematically shown. The cutting path produced by the cutting end 121 of the cutting tool 12 corresponds to the programmed cutting path 40 through the application of the described method 100.

As shown in Figure 7, the predefined cutting path 40 includes a sequence of points on the panel, including points 42, 43, 44, and 45 of the curvilinear segment on which the cutting tool 12 must act. However, it is clear that the path can include a different number of points than those shown in Figure 7.

The predefined cutting path 40 includes a curvilinear segment extending from point 42 to point 45 of the path shown in Figure 7.

During the cutting operation, the processing unit commands the guiding means of the machine tool M, so as to position, by translation along the X and Y directions and/or combined rotation, the foot of axis S - and thus the operational axis A - coinciding with the starting point of the predefined cutting path 40, along which to perform the piece P's cut.

Subsequently, on command from the processing unit, the cutting tool 12 is oriented by rotating the tool holder 11 relative to the operator group G by a rotation angle associated with the starting point of the predefined cutting path 40 so that when the tool 12 is lowered and penetrates the panel to the necessary depth, it imprints on the panel its trace, such as segment 22, already oriented according to the tangent of the predefined cutting path at its starting point.

During the cutting operation, the tool 12 incises by dragging along the cutting direction D intersecting the panel's surface along a segment 22 corresponding to the projection, on the panel's surface, of the edge 122 of the blade along the operational axis A of the tool holder 11.

The method includes generating a cutting path $\Gamma$, comprising respective points 72, 73, 74, and 75, corresponding to the tool holder's centre 11 to perform a cut corresponding to the programmed one.

For example, during the cutting operation, when segment 22 (and thus the cutting tool 12) is positioned near point 42, the method proceeds with determining a tangent line 60 to the curvilinear segment at point 42. The point 72 of the cutting path $\Gamma$ is determined by proceeding for the spacing value L from point 42 along the tangent line 60.

Subsequently, a rotation angle $\alpha$ of the cutting tool 12 is determined based on the inclination of the corresponding tangent line 60 relative to a reference axis, which at point 42 will correspond to 90° relative to the Y axis of the reference system shown in Figure 7.

The rotation angle $\alpha$ is then associated with the corresponding position/point 72 so that segment 22 (and thus the cutting tool 12 itself) is positioned with the cutting end 121 of the edge 122 at point 42 and the respective tool centre at point 72 of the cutting path $\Gamma$.

The method proceeds with determining the positions corresponding to the tool centre for the remaining points 43, 44, and 45 of the predefined cutting path 40 by applying the procedure of determining a cutting path $\Gamma$ described with reference to point 42 of the curvilinear segment.

Since positions 72, 73, 74, 75 are associated with corresponding points 42, 43, 44, and 45, each of positions 72-75 is associated with a corresponding rotation angle $\alpha$.

The processing unit can also be configured to command the guiding means of a machine tool M to position the operational axis A of the tool holder 11 at positions 72, 73, 74, 75 and rotate the tool holder 11 by a rotation angle $\alpha$ associated with a corresponding position 72, 73, 74, 75 on the cutting path $\Gamma$. In this way, the operator group G of the machine tool can be operated based on the cutting path $\Gamma$ rather than the curvilinear segment of the predefined cutting path 40.

Although the method for determining a cutting path has been described with reference to Figure 7 during the cutting operation, it is clear that the determination of the cutting path can precede this operation and thus be performed before proceeding with the cutting operation.

Referring to Figures 8-11, a cutting path $\Gamma$ and the cutting path of the cutting end 121 of the cutting tool 12, performed on a panel following a determination of the cutting path $\Gamma$ according to an embodiment of the method object of the present invention, are schematically shown.

In the figures, the predefined cutting path 40 is shown together with the curve $\Gamma$ of the centres C, corresponding to the determined cutting path $\Gamma$. In the figures, the cutting tool is shown in 4 distinct positions. In this example, the predefined cutting path 40 is an arc of a parabola parameterized by a parameter u.

In particular, the predefined cutting path 40 described as a function of parameter u is represented by a continuous line in Figures 8-11 and includes points P(u) occupied by the cutting end 121 of the cutting tool 12. In these examples, the cutting end 121 is positioned at point "P" and the curve is traversed from right to left, thus the sequence of Figures 8-11 describes the sequence of points occupied by the cutting end 121 of the cutting tool 12.

The cutting path $\Gamma$ in Figures 8-11 represents the locus of positions C(u) occupied by the tool centre, when the cutting tool 12 has its cutting end 121 at point P(u), and its projection on the panel to be cut is placed along the tangent 22 to the curvilinear segment, as taught by the method object of the patent and conforming to the formulas specified previously. The cutting path $\Gamma$ in Figures 8-11 is represented by a dotted line.

From the cutting path $\Gamma$, a "recess" 78 is observed, the extent of which is proportional to the spacing value L between said cutting end 121 of the edge 122 and the operational axis A of the tool holder 11.

As observed from Figures 8-11, the cutting path $\Gamma$ widens near and at the curvilinear segment of the predefined cutting path 40 where the curvature is more pronounced. The cutting end 121 of the cutting tool 12 incises at point P of the curvilinear segment of the predefined cutting path 40, maintaining a correspondence of the actual cutting path to the predefined cutting path and obtaining a "filamentous" cut as programmed.

Advantageously, through the method, object of the invention, it is possible to perform cuts correctly, reducing discrepancies between the predefined section, performed by the tool centre, and the one actually cut by the cutting end of the tool. The method therefore eliminates undesirable drifts at the tool's extremities, resulting in consequent tears and/or cuts on the machined panel that do not correspond to the programmed section.

A second advantage is that through the method object of the invention, it is possible to coordinate the tool's position, achieved, for example, through the translations of the machine's moving carriages and the tool's rotation around the tool holder's operational axis, for particular types of cutting tools where the cutting edge's tip is spaced from the tool holder's operational axis to maintain a correspondence of the actual cutting path to the predefined cutting path.

The present invention has been described by way of illustration, but not limitation, according to its preferred embodiments, but it is understood that variations and/or modifications may be made by those skilled in the art without departing from the scope of protection as defined by the attached claims.

## Claims

1. Method (100) for determining a cutting path ($\Gamma$) for a processing unit of a machine tool (M) comprising an operating group (G), which comprises a tool holder (11) that mounts a cutting tool (12), wherein said cutting tool (12) comprises an edge (122) whose cutting end (121) is spaced with respect to an operating axis (A) of said tool holder (11), and wherein said method comprises:

   obtaining (101) at least a portion of a predetermined cutting path (40) comprising a curvilinear segment;
   **characterised by**
   obtaining (102) a spacing value (L) between said cutting edge (121) of the edge (122) and said operating axis (A) of the tool holder (11); and
   determining a cut path ($\Gamma$) based on said spacing value (L) and the curvature of said curvilinear segment so that the cutting end (121) travels along said predetermined cutting path (40) while said operating axis (A) of the tool holder (11) occupies a corresponding position on said cutting path ($\Gamma$).

2. The method of claim 1 wherein determining (104) said cut path ($\Gamma$) comprises determining a plurality of points of the curvilinear segment and for each point of a plurality of points:

   a) determining (1041) a tangent line (60) to said curvilinear segment at the corresponding point (42, 43, 44, 45) of the curvilinear segment;
   b) determining (1042) a position (72, 73, 74, 75) on said cut path ($\Gamma$) by proceeding from said point (42, 43, 44, 45) along said tangent line (60) for said spacing value (L);
   c) determining (1043) a rotation angle ($\alpha$) of the cutting tool (12) based on the inclination of said corresponding tangent line (60) with respect to a reference axis; and
   d) associating (1044) said angle of rotation ($\alpha$) of the cutting tool (12) to said position (72, 73, 74, 75).

3. The method according to claim 2, wherein said cutting tool (12) is configured to cut by dragging said cutting end (121) along said predetermined cutting path (40) along the plurality of points (42-45), while said operating axis (A) of the tool holder (11) occupies a corresponding position on said cutting path ($\Gamma$), and while said rotation angle ($\alpha$) assumes a value for each of the positions (72-75) of said cutting path ($\Gamma$).

4. Method according to claim 2 or 3, wherein determining (1041) a tangent line (60) to said curvilinear segment at the corresponding point (42, 43, 44, 45) comprises calculating the derivative of the curvilinear segment by means of a numerical or analytical method in the corresponding point (42, 43, 44, 45).

5. The method according to any one of the preceding claims, wherein said machine tool (M) is a numerical control machine configured for cutting a panel comprising soft materials such as cardboard, plastic, poled plastic, composite materials, and/or wood.

6. Method according to any one of the preceding claims, wherein the determining step (104) of said cutting path ($\Gamma$) is carried out during the cutting of said panel.

7. Method according to any one of the preceding claims, wherein said predetermined cutting path (40) comprises a linear flat path.

8. Processing unit configured to perform the method according to any one of the preceding claims.

9. The processing unit according to claim 8, configured to control driving means of said machine tool M to position said operating axis at a position (72, 73, 74, 75) on said cutting path ($\Gamma$) and rotate the tool holder (11) by a rotation angle ($\alpha$)

associated with said position (72, 73, 74, 75).

10. Computer program product comprising instructions that when executed by a processing unit, result in performing the method according to any one of claims 1-7.

## Patentansprüche

1. Verfahren (100) zur Bestimmung eines Schneidwegs ($\Gamma$) für eine Bearbeitungseinheit einer Werkzeugmaschine (M) mit einer Arbeitsgruppe (G), die einen Werkzeughalter umfasst (11), der ein Schneidwerkzeug (12) aufnimmt, wobei das Schneidwerkzeug (12) eine Kante (122) aufweist, deren Schneidende (121) in Bezug auf eine Arbeitsachse (A) des Werkzeughalters (11) beabstandet ist, und wobei das Verfahren umfasst:

   Erhalten (101) von mindestens einem Teil eines vorbestimmten Schneidpfades (40), der ein gekrümmtes Segment umfasst; **gekennzeichnet durch** Ermitteln (102) eines Abstandswertes (L) zwischen der Schneidkante (121) der Kante (122) und der Arbeitsachse (A) des Werkzeughalters (11); und
   Bestimmen einer Schneidbahn ($\Gamma$) auf der Grundlage des Abstandswertes (L) und der Krümmung des gekrümmten Segments, so dass sich das Schneidende (121) entlang der vorgegebenen Schneidbahn (40) bewegt, während die Arbeitsachse (A) des Werkzeughalters (11) eine entsprechende Position auf der Schneidbahn ($\Gamma$) einnimmt.

2. Verfahren nach Anspruch 1, wobei das Bestimmen (104) des Schnittpfades ($\Gamma$) das Bestimmen einer Vielzahl von Punkten des krummlinigen Segments und für jeden Punkt einer Vielzahl von Punkten umfasst:

   a) Bestimmen (1041) einer Tangente (60) an das gekrümmte Segment an dem entsprechenden Punkt (42, 43, 44, 45) des gekrümmten Segments;
   b) Bestimmen (1042) einer Position (72, 73, 74, 75) auf dem Schnittweg ($\Gamma$), indem von dem Punkt (42, 43, 44, 45) entlang der Tangente (60) für den Abstandswert (L) ausgegangen wird;
   c) Bestimmen (1043) eines Drehwinkels ($\alpha$) des Schneidwerkzeugs (12) auf der Grundlage der Neigung der entsprechenden Tangentenlinie (60) in Bezug auf eine Bezugsachse; und
   d) Zuordnen (1044) des Drehwinkels ($\alpha$) des Schneidwerkzeugs (12) zu der Position (72, 73, 74, 75) .

3. Verfahren nach Anspruch 2, wobei das Schneidwerkzeug (12) so konfiguriert ist, dass es schneidet, indem es das Schneidende (121) entlang des vorbestimmten Schneidwegs (40) entlang der Vielzahl von Punkten (42-45) zieht, während die Arbeitsachse (A) des Werkzeughalters (11) eine entsprechende Position auf dem Schneidweg ($\Gamma$) einnimmt und während der Drehwinkel ($\alpha$) einen Wert für jede der Positionen (72-75) des Schneidwegs ($\Gamma$) annimmt.

4. Verfahren nach Anspruch 2 oder 3, wobei das Bestimmen (1041) einer Tangente (60) an das gekrümmte Segment in dem entsprechenden Punkt (42, 43, 44, 45) das Berechnen der Ableitung des gekrümmten Segments mittels eines numerischen oder analytischen Verfahrens in dem entsprechenden Punkt (42, 43, 44, 45) umfasst.

5. Verfahren nach einem der vorhergehenden Ansprüche, wobei die Werkzeugmaschine (M) eine numerisch gesteuerte Maschine ist, die zum Schneiden einer Platte aus weichen Materialien wie Karton, Kunststoff, poliertem Kunststoff, Verbundmaterialien und/oder Holz konfiguriert ist.

6. Verfahren nach einem der vorhergehenden Ansprüche, wobei der Schritt (104) der Bestimmung des Schneidweges ($\Gamma$) während des Schneidens der Platte durchgeführt wird.

7. Verfahren nach einem der vorhergehenden Ansprüche, wobei die vorgegebene Schneidbahn (40) eine lineare, flache Bahn ist.

8. Verarbeitungseinheit zur Durchführung des Verfahrens nach einem der vorhergehenden Ansprüche.

9. Verarbeitungseinheit nach Anspruch 8, die so konfiguriert ist, dass sie die Antriebsmittel der Werkzeugmaschine M steuert, um die Arbeitsachse an einer Position (72, 73, 74, 75) auf dem Schneidweg ($\Gamma$) zu positionieren und den Werkzeughalter (11) um einen Drehwinkel ($\alpha$) zu drehen, der mit der Position (72, 73, 74, 75) verbunden ist.

10. Computerprogrammprodukt, das Anweisungen enthält, die, wenn sie von einer Verarbeitungseinheit ausgeführt werden, zur Durchführung des Verfahrens einem der Ansprüche 1 bis 7 führen.

**Revendications**

1. Procédé (100) de détermination d'une trajectoire de coupe (Γ) pour une unité d'usinage d'une machine-outil (M) comprenant un groupe de commande (G), qui comprend un porte-outil (11) qui monte un outil de coupe (12), dans lequel ledit outil de coupe (12) comprend une arête (122) dont l'extrémité coupante (121) est espacée par rapport à un axe de fonctionnement (A) dudit porte-outil (11), et dans lequel ledit procédé comprend:

   obtenir (101) au moins une partie d'une trajectoire de coupe prédéterminée (40) comprenant un segment curviligne; **caractérisé par**
   obtenir (102) une valeur d'espacement (L) entre ladite arête de coupe (121) de l'arête (122) et ledit axe de fonctionnement (A) du porte-outil (11); et
   déterminer une trajectoire de coupe (Γ) sur la base de ladite valeur d'espacement (L) et de la courbure dudit segment curviligne de sorte que l'extrémité coupante (121) se déplace le long de ladite trajectoire de coupe prédéterminée (40) tandis que ledit axe de fonctionnement (A) du porte-outil (11) occupe une position correspondante sur ladite trajectoire de coupe (Γ).

2. Procédé selon la revendication 1 dans lequel la détermination (104) de ladite trajectoire de coupe (Γ) comprend la détermination d'une pluralité de points du segment curviligne et pour chaque point d'une pluralité de points:

   a) déterminer (1041) une ligne tangente (60) audit segment curviligne au point correspondant (42, 43, 44, 45) du segment curviligne;
   b) déterminer (1042) une position (72, 73, 74, 75) sur ladite trajectoire de coupe (Γ) en procédant à partir dudit point (42, 43, 44, 45) le long de ladite ligne tangente (60) pour ladite valeur d'espacement (L);
   c) déterminer (1043) un angle de rotation ($\alpha$) de l'outil de coupe (12) en fonction de l'inclinaison de ladite ligne tangente correspondante (60) par rapport à un axe de référence; et
   d) associer (1044) ledit angle de rotation ($\alpha$) de l'outil de coupe (12) à ladite position (72, 73, 74, 75).

3. Procédé selon la revendication 2, dans lequel ledit outil de coupe (12) est configuré pour couper en entraînant ladite extrémité de coupe (121) le long de ladite trajectoire de coupe prédéterminée (40) le long de la pluralité de points (42-45), tandis que ledit axe de fonctionnement (A) du porte-outil (11) occupe une position correspondante sur ladite trajectoire de coupe (Γ), et tandis que ledit angle de rotation ($\alpha$) prend une valeur pour chacune des positions (72-75) de ladite trajectoire de coupe (Γ).

4. Procédé selon la revendication 2 ou 3, dans lequel la détermination (1041) d'une ligne tangente (60) audit segment curviligne au point correspondant (42, 43, 44, 45) comprend le calcul de la dérivée du segment curviligne au moyen d'un procédé numérique ou analytique au point correspondant (42, 43, 44, 45).

5. Procédé selon l'une quelconque des revendications précédentes, dans lequel ladite machine-outil (M) est une machine à commande numérique configurée pour découper un panneau composé de matériaux souples tels que le carton, le plastique, le plastique poli, les matériaux composites et/ou le bois.

6. Procédé selon l'une quelconque des revendications précédentes, dans lequel l'étape de détermination (104) de ladite trajectoire de coupe (Γ) est réalisée pendant la découpe dudit panneau.

7. Procédé selon l'une quelconque des revendications précédentes, dans lequel ladite trajectoire de coupe prédéterminée (40) comprend une trajectoire linéaire plane.

8. Unité de traitement configurée pour exécuter le procédé selon l'une quelconque des revendications précédentes.

9. Unité de traitement selon la revendication 8, configurée pour commander des moyens d'entraînement de ladite machine-outil M pour positionner ledit axe de travail à une position (72, 73, 74, 75) sur ladite trajectoire de coupe (Γ) et faire tourner le porte-outil (11) d'un angle de rotation ($\alpha$) associé à ladite position (72, 73, 74, 75).

10. Produit de programme informatique comprenant des instructions qui, lorsqu'elles sont exécutées par une unité de traitement, permettent d'appliquer le procédé décrit dans l'une des revendications 1 à 7.

Fig. 1

Fig. 2

Fig. 3

Fig. 4a

Fig. 4b

Fig. 5 (Prior Art)

101 → Obtaining a curvilinear segment of a predetermined cutting path

102 → Obtaining a spacing value

104 → Determining a cut path

1041 → Determining a tangent line at the corresponding point of the curvilinear segment

1042 → Determining a position corresponding to the centre of the tool on said cut path

1043 → determining a rotation angle

1044 → associating the angle to a corresponding position on said cut path

Fig. 6

Fig.7

Fig. 8

Fig. 9

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2111723 A
- EP 3859464 A1
- US 6728595 B2
- US 5923561 A